**Europäisches Patentamt**

**European Patent Office**

**Office européen des brevets**

(19)

(11) Veröffentlichungsnummer: **0 048 507**
**B1**

(12) # EUROPÄISCHE PATENTSCHRIFT

(45) Veröffentlichungstag der Patentschrift:
05.12.84

(51) Int. Cl.³: **A 22 C 15/00**

(21) Anmeldenummer: **81200957.9**

(22) Anmeldetag: **31.08.81**

(54) **Verfahren und Vorrichtung zum Herstellen von Kranzdarmwürsten.**

(30) Priorität: **18.09.80 DE 3035161**

(43) Veröffentlichungstag der Anmeldung:
**31.03.82 Patentblatt 82/13**

(45) Bekanntmachung des Hinweises auf die Patenterteilung:
**05.12.84 Patentblatt 84/49**

(84) Benannte Vertragsstaaten:
**AT BE CH DE FR GB IT LI NL SE**

(56) Entgegenhaltungen:
**DE - A - 2 004 477**
**DE - A - 2 361 981**
**FR - A - 2 230 295**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

EP 0 048 507 B1

## Beschreibung

Die Erfindung betrifft ein Verfahren zum Zuführen einer bestimmten gewünschten Länge einer bereits an einem Ende einer noch nicht gefüllten Wursthülle für einen Kranzdarm eingeklippten Aufhängeschnur zum Einklippen in das andere Ende der dann gefüllten Kranzdarmwurst und eine Vorrichtung zu seiner Durchführung.

Es ist bereits bekannt, bei der Herstellung von Kranzdarmwürsten auf Wurstfüllautomaten, gekoppelt mit Verschliessautomaten, einen mitlaufenden Faden mit einzuklippen. Die zur Bildung der Kranzdarmwurst erforderliche Schnurlänge wird dabei von Hand vorgegeben, wobei die Schnurlänge je nach Geschicklichkeit der Bedienungsperson mehr oder weniger stark variiert. Die Bedienungsperson ist aber durch das Vorgeben der Schnurlängen stark beansprucht, so dass sie sich nicht ausreichend um die Überwachung des Füll- und Verschliessvorganges kümmern kann. Dieses bekannte Verfahren weist alle Merkmale im ersten Teil des Anspruchs 1 auf.

Aus der DT-A-20 04 477 ist bereits eine Klippmaschine zum Verschliessen von Wursthüllen bei gleichzeitigem Einklippen von Wurstgarn bekannt. Hierbei handelt es sich aber um ein Verschliessgerät zum Vorkonfektionieren von Darmabschnitten, die einseitig verschlossen und gleichzeitig mit Wurstgarn versehen werden. Das eingeklippte Wurstgarn wird dann in einem weiteren Arbeitsgang zu einer Schlaufe verknotet. Diese Arbeitsweise ist jedoch sehr zeitaufwendig und damit für eine rationelle Herstellung von Kranzdarmwürsten nicht geeignet.

Der Erfindung liegt daher die Aufgabe zugrunde, bei der fortlaufenden Herstellung von Kranzdarmwürsten auf einem Wurstfüllautomaten, bei dem das Ende eines mitlaufenden Fadens vor Beginn des Füllvorgangs in das verschlossene Ende eines längeren auf das Füllrohr des Wurstfüllautomaten aufgezogenen Wursthüllenabschnitts eingeklippt wird, der Faden während des Füllvorgangs von dem sich bildenden Wurststrang durch eine Einschnür- und Verdrängungseinrichtung hindurch abgezogen und nach Bildung einer Einschnür- und Verdrängungsstelle mit zwei gleichzeitig im Abstand voneinander gesetzten Verschlussklammern erneut eingeklippt wird, worauf der Wurststrang zwischen den beiden gleichzeitig gesetzten Verschlussklammern durchgetrennt wird, den Faden in gewünschter Länge zuzuführen, um eine automatische Fertigung und damit höhere Produktivität zu erzielen und Schnurmaterial einzusparen.

Erfindungsgemäss wird diese Aufgabe verfahrensmässig dadurch gelöst, dass eine Fadenvorschubklemme nach jedem Klippvorgang unmittelbar vor oder etwa zu Beginn des Füllvorgangs durch einen eingebauten Hub einen Fadenabschnitt einer einstellbar vorgegebenen Länge zum Abzug durch den Wurststrang freigibt. Die Vorrichtung zum Zuführen eines Fadenabschnitts für den Einsatz im Rahmen des Verfahrens besteht erfindungsgemäss aus einer Fadenvorschubklemme, einem Antrieb für die Fadenvorschubklemme zur Ausführung eines Rückhubs und eines anschliessenden Hubs in der Länge des Fadenabschnitts und einer Fadenrücklaufsperre, die den Faden beim Rückhub der Fadenvorschubklemme festhält.

Die mit der Erfindung erzielten Vorteile bestehen im wesentlichen darin, dass durch eine höhere Produktivität und Einsparung von Fadenmaterial Kranzdarmwürste billiger und schneller hergestellt werden, da das bisher von Hand vorgenommene ungenaue Vorgeben von Schnurabschnitten entfällt.

Der weitere Vorteil besteht darin, dass in die Verschlussklammern von Kranzdarmwürsten automatisch gleich lange Schnurabschnitte eingeklippt werden, so dass die Enden der Kranzdarmwürste einen solchen Abstand voneinander aufweisen, dass sie beim Aufhängen auf einen Rauchstab diesen nicht berühren und somit keine Druckstellen bekommen. Beim manuellen Vorgeben der Schnurlänge fällt diese dagegen ungleichmässig lang aus. Bei zu kurzer Schnurlänge berühren die Enden der Kranzdarmwurst beim Aufhängen den Rauchstab; bei grösserer Schnurlänge wird unnötig Schnurmaterial verschenkt, und beim Einhängen der beschickten Rauchstäbe in den Rauchwagen können die Kranzdarmwürste den darunter befindlichen Rauchstab berühren und ebenfalls unerwünschte Druckstellen bekommen.

Es ist vorteilhaft, die Erfindung so auszuführen, dass der Antrieb der Fadenvorschubklemme durch die Verschliess- und/oder Füllvorrichtung so gesteuert wird, dass der gewünschte Schnurabschnitt spätestens vor dem Ende des Füllvorganges zur Verfügung steht.

Eine vorteilhafte Ausführungsform der Erfindung besteht darin, dass Anschläge vorgesehen sind, mit denen der Hub für die gewünschte Schnurabschnittslänge einstellbar ist.

Die auf einem verstellbaren Verbindungssteg angebrachten Anschläge sind nach einer weiteren Ausbildung der Erfindung keilförmig angeordnet und drücken die Klemmbacken der Fadenvorschubklemme in der Endstellung zusammen, so dass ein weiteres Abziehen der Schnur durch die sich füllende Wurst nicht möglich ist, wodurch sich eine konstante Schnurlänge zwischen den Enden der Kranzdarmwurst ergibt.

Nach einer weiteren Ausführungsform der Erfindung ist die Anpresskraft der Klemmbacken durch elastische Elemente einstellbar.

In weiterer Abwandlung der Erfindung weist die Fadenvorschubklemme eine Verbindungsplatte auf, die für den Hub mit einer Stange verbunden ist, welche durch einen Antrieb, z.B. Hubmagnet oder Druckluftzylinder bewegbar ist.

Es ist vorteilhaft, dass die Fadenrücklaufsperre vorzugsweise durch Druckfedern einstellbare Klemmelemente aufweist, die die Schnur nur in Abzugsrichtung freigibt. Dadurch passen sich die Klemmelemente der Schnurstärke an, wodurch die Bremswirkung nahezu konstant bleibt. Diese Anordnung stellt sicher, dass beim Rückhub der Fadenvorschubklemme die am Wurstanfang eingeklippte Schnur nicht aus der Verschlussklammer gezogen bzw. der verklippte Wurstanfang nicht vom Füllrohr weggezogen wird. Die Klemm-elemente der Fadenrücklaufsperre sorgen über-dies dafür, dass beim Rückhub der Fadenvorschubklemme die Schnur gehalten wird.

Ein Ausführungsbeispiel der Erfindung ist in der Zeichnung dargestellt und wird im folgenden näher beschrieben.

Es zeigen:

Fig. 1 eine Draufsicht auf die erfindungsge-mässe Vorrichtung mit abgeschnittener Kranz-darmwurst;

Fig. 2 eine Draufsicht auf die erfindungsge-mässe Vorrichtung mit vorgeschobenen Schnur-abschnitt;

Fig. 3 eine Draufsicht auf die erfindungsgemässe Vorrichtung mit gefüllter Kranzdarmwurst und abgezogener Schnur beim Einschnürvorgang;

Fig. 4 eine Ansicht einer fertigen, auf einen Rauchstab aufgehängten Kranzdarmwurst und

Fig. 5 eine Draufsicht auf die Schnurzuführeinrichtung der erfindungsgemässen Vorrichtung.

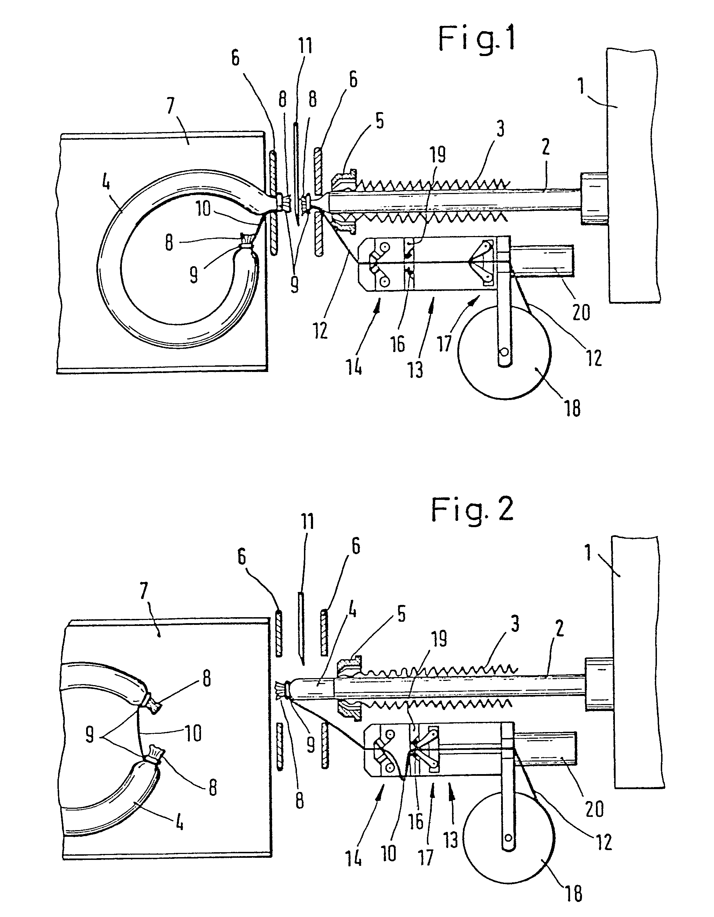

Die Fig. 1 zeigt einen nicht weiter dargestellten Wurstfüllautomaten 1, an welchem ein Füllrohr 2 angeordnet ist. Auf das Füllrohr 2 ist eine geraffte Wursthülle 3 für Kranzdarmwürste 4 aufgeschoben, die nahe dem Austrittsende des Füllrohres 2 durch eine Darmbremse 5 gehalten wird. Vor dem Austrittsende des Füllrohres 2 ist eine Einschnür- und Verdrängungseinrichtung 6 mit sich öffnenden, gespreizten Scheren eines nicht ge-zeigten Verschliessautomaten und eine Kranz-darmrutsche 7 angeordnet. Auf ihr befindet sich eine gefüllte, verschlossene Kranzdarmwurst 4, mit den Darmzöpfen 8 und den Verschlussklammern 9, in die die Enden des Schnurabschnitts 10 eingeklippt sind. Zwischen den sich öffnenden, gespreizten Scheren der Einschnür- und Verdrängungseinrichtung 6 ist ein Trennmesser 11 gezeigt, das den Darmzopf 8 zwischen den beiden Verschlussklammern 9 durchschnitten hat. In der am Darmzopf 8 der nächsten zu füllenden Kranzdarmhülle 3 angebrachten Verschlussklammer 9 ist der Anfang der Schnur 12 eingeklippt.

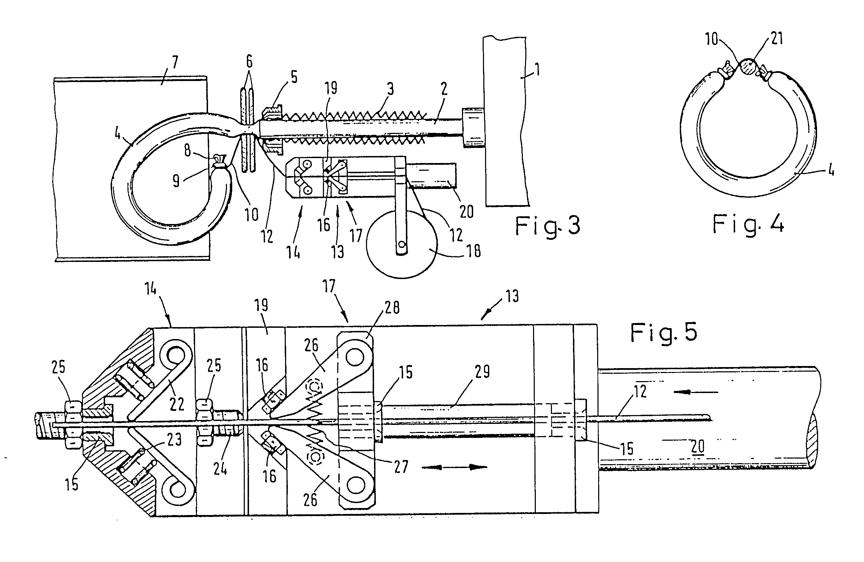

Zum Füllrohr 2 ist eine Schnurzuführeinrichtung 13 angeordnet, die eine in Ausgangsstellung befindliche Fadenvorschubklemme 17, verstellbare Anschläge 16 und eine Fadenrücklaufsperre 14 aufweist. In diesen in Fig. 5 näher beschriebenen Bauteilen wird eine von einer Vorratsrolle 18 abgezogene Schnur 12 geführt. Mittels des Verbindungssteges 19 sind die Anschläge 16 und somit der Hub der Fadenvorschubklemme 17 einstellbar, damit jeweils nur ein gewünschter Abschnitt 10 der Schnur 12 freigegeben wird. Die Fadenvorschubklemme 17 ist mit einem Antrieb 20 verbunden.

Fig. 2 zeigt die teilweise gefüllte Kranzdarmwurst 4 bei noch gespreizten, geöffneten Scheren der Einschnür- und Verdrängungseinrichtung 6 und das vom Darmzopf 8 zurückgezogene Trennmesser 11. Die Fadenvorschubklemme 17 hat den vorbestimmten Hub bis zu den verstellbaren Anschlägen 16 ausgeführt, so dass dadurch der vorgegebene Schnurabschnitt 10 zwischen der Fadenvorschubklemme 17 und der Fadenrücklaufsperre 14 zum Abziehen zur Verfügung steht.

Fig. 3 zeigt eine gefüllte Kranzdarmwurst 4, deren zweites Ende noch nicht verschlossen ist. Der von der Fadenvorschubklemme 17 bereitgestellte Schnurabschnitt 10 wurde während des Füllvorganges durch die sich füllende Wurst abgezogen. Kurz darauf wird das Ende der freigegebenen Länge des Schnurabschnittes 10 in die Verschlussklammer 9 der gefüllten Kranzdarmwurst 4 und – bei einer Doppelclipmaschine – gleichzeitig der Anfang der Schnur 12 in die andere Verschlussklammer 9 der nächsten zu füllenden Kranzdarmhülle 3 eingeklippt.

In fig. 4 ist die an einem Rauchstab 21 aufgehängte Kranzdarmwurst 4 mit eingeklipptem Schnurabschnitt 10 dargestellt, wobei die beiden Enden der gefüllten Kranzdarmwurst 4 den Rauchstab 21 nicht berühren.

Die Fig. 5 zeigt die erfindungsgemässe Vorrichtung mit der Schnurzuführeinrichtung 13 mit ihren Bauteilen im einzelnen. Wie bereits ausgeführt wurde, ist die Schnur 12 durch die Fadenvorschubklemme 17, die verstellbaren keilförmig angeordneten Anschläge 16, die Fadenrücklaufsperre 14 und die Führungsbuchsen 15 geführt. Die Führungsbuchsen 15 gewährleisten eine einwandfreie Schnurführung.

Die Fadenvorschubklemme 17 weist verschwenkbare Klemmbacken 26 auf, die bei Hubende von den keilförmig angeordneten Anschlägen 16 zusammengedrückt sind. Die Anpresskraft der Klemmbacken 26 ist durch elastische Elemente, z.B. durch Zugfedern 27, einstellbar. Die Fadenvorschubklemme 17 ist über eine Verbindungsplatte 28 mit dem Antrieb 20 über eine Stange 29 verbunden, wobei der Antrieb 20 beispielsweise ein Hubmagnet oder ein Druckluftzylinder sein kann.

Die Fadenrücklaufsperre 14, die die Schnur 12 beim Rückhub der Fadenvorschubklemme 17 festhält, weist verschwenkbare Klemmelemente 22 auf, die die Schnur 12 nur in Abzugsrichtung freigeben. Die Anpresskraft der Klemmelemente 22 ist durch Druckfedern 23 oder sonstige elastische Elemente einstellbar. Mit einer Spindel 24, die den Verbindungssteg 19 mit den Anschlägen 16 verschiebt, wird der Hub der Fadenvorschubklemme 17 eingestellt. Muttern 25 dienen zum Kontern der Spindel 24. Anstelle der Anschläge 16 können Bolzen oder Rollen auf dem Verbindungssteg 19 angeordnet sein.

**Patentansprüche**

1. Verfahren zum fortlaufenden Herstellen von Kranzdarmwürsten auf einem Wurstfüllautomaten (1), bei dem das Ende eines mitlaufenden Fadens (12) vor Beginn des Füllvorgangs in das verschlossene Ende eines längeren auf das Füllrohr (2) des Wurstfüllautomaten aufgezogenen Wursthüllenabschnitts (3) eingeklippt wird, der Faden (12) während des Füllvorgangs von dem sich bildenden Wurststrang durch eine Einschnür- und Verdrängungseinrichtung (6) hindurch abgezogen und nach Bildung einer Einschnür- und Verdrängungsstelle mit zwei gleichzeitig im Abstand voneinander gesetzten Verschlussklammern (9) erneut eingeklippt wird, worauf der Wurststrang zwischen den beiden gleichzeitig gesetzten Verschlussklammern durchgetrennt wird, dadurch gekennzeichnet, dass eine Fadenvorschubklemme (17) nach jedem Klippvorgang unmittelbar vor oder etwa zu Beginn des Füllvorgangs durch einen eingebauten Hub einen Fadenabschnitt einer einstellbar vorgegebenen Länge zum Abzug durch den Wurststrang freigibt.

2. Vorrichtung zum Zuführen eines Fadenabschnitts einer einstellbar vorgegebenen Länge für den Einsatz im Rahmen des Verfahrens nach Anspruch 1, gekennzeichnet durch eine Fadenvorschubklemme (17), einen Antrieb (20) für die Fadenvorschubklemme zur Ausführung eines Rückhubs und eines anschliessenden Hubs in der Länge des Fadenabschnitts und eine Fadenrücklaufsperre (14), die den Faden beim Rückhub der Fadenvorschubklemme (17) festhält.

3. Vorrichtung nach Anspruch 2, dadurch gekennzeichnet, dass Anschläge (16) vorgesehen sind, mit denen der Hub der Fadenvorschubklemme (17) für die gewünschte Schnurabschnittslänge (10) einstellbar ist.

4. Vorrichtung nach den Ansprüchen 2 und 3, dadurch gekennzeichnet, dass die auf einem verstellbaren Verbindungssteg (19) angebrachten Anschläge (16) keilförmig angeordnet sind und die Klemmbacken (26) der Fadenvorschubklemme (17) in Endstellungen zusammendrücken.

5. Vorrichtung nach Anspruch 4, dadurch gekennzeichnet, dass die Anpresskraft der Klemmbacken (26) durch elastische Elemente (27) einstellbar ist.

6. Vorrichtung nach den Ansprüchen 2, 4 und 5, dadurch gekennzeichnet, dass die Fadenvorschubklemme (17) eine Verbindungsplatte (28) aufweist, die für den Hub mit einer Stange (29) verbunden ist, welche durch einen Antrieb (20) bewegbar ist.

7. Vorrichtung nach Anspruch 2, dadurch gekennzeichnet, dass die Fadenrücklaufsperre (14) einstellbare Klemmelemente (22) aufweist, die die Schnur (12) nur in Abzugsrichtung freigibt.

8. Vorrichtung nach Anspruch 7, dadurch gekennzeichnet, dass die Anpresskraft der Klemmelemente (22) durch Druckfedern (23) einstellbar ist.

**Revendications**

1. Procédé pour la fabrication continue de saucisses à boyau en couronne sur une machine automatique à remplir les saucisses (1), dans lequel l'extrémité d'un fil (12), soumis au même mouvement d'entraînement, est inséré avant le début de l'opération de remplissage, dans l'extrémité fermée d'une section d'enveloppe de saucisse plus longue glissée sur le tube de remplissage (2) de la machine automatique à remplir les saucisses, le fil (12) étant tiré pendant l'opération de remplissage de l'élément de saucisse en formation par un dispositif de ligaturage et d'étranglement (6) et étant à nouveau inséré après formation d'un point de ligaturage et d'étranglement, dans deux agrafes de fermeture (9) placées simultanément à distance l'une de l'autre, avant que l'élément de saucisse ne soit sectionné entre les deux agrafes de fermeture placées simultanément, caractérisé en ce qu'une pince d'entraînement de fil (17) libère une section de fil d'une longueur prédéterminée réglable en vue du tirage à travers l'élément de saucisse, après chaque opération d'insertion immédiatement avant ou environ au début de l'opération de remplissage, suivant une course prédéterminée.

2. Dispositif pour l'adduction d'une section de fil d'une longueur prédéterminée réglable, pour l'utilisation dans le cadre du procédé selon la revendication 1, caractérisé par une pince d'entraînement du fil (17), un dispositif d'entraînement (20) pour la pince d'entraînement du fil, de façon à exécuter une course de retour et une course suivante de longueur égale à la section de fil, et un dispositif de verrouillage du recul du fil (14) qui maintient le fil pendant la course de retour de la pince d'entraînement du fil (17).

3. Dispositif selon la revendication 2, caractérisé en ce que des butées (16) sont prévues afin de pouvoir régler la course de la pince d'entraînement du fil (17) pour la longueur de section de cordon souhaitée (10).

4. Dispositif selon les revendications 2 et 3, caractérisé en ce que les butées (16) disposées sur une traverse de jonction (19) déplaçable sont disposées en coin, et qu'elles réunissent par serrage en position de fin de course les mâchoires de serrage (26) de la pince d'entraînement du fil (17).

5. Dispositif selon la revendication 4, caractérisé en ce que la force de compression des mâchoires de serrage (26) est réglable au moyen d'éléments élastiques (27).

6. Dispositif selon les revendications 2, 4 et 5, caractérisé en ce que la pince d'entraînement du fil (17) présente une plaque de jonction (28) qui est reliée pour la course avec une tige (29), qui peut être mise en mouvement par un dispositif d'entraînement (20).

7. Dispositif selon la revendication 2, caractérisé en ce que le dispositif empêchant le recul du fil (14) présente des éléments de serrage (22) réglables qui ne libèrent le cordon (12) que dans le sens du tirage.

8. Dispositif selon la revendication 7, caractérisé en ce que la force de compression des éléments de serrage (22) est réglable au moyen de ressorts de compression (23).

## Claims

1. A process of continually making annular sausages on an automatic sausage-filling machine (1), in which the end of a continuously supplied string (12) is clipped before the beginning of the filling operation into the closed end of a longer sausage casing section (3), which has been fitted on the filling tube (2) of the automatic sausage-filling machine, and during the filling operation the string (12) is withdrawn through a constricting and displacing device (6) from the sausage being formed, and after the formation of a constricted and displaced portion the string (12) is clipped again by means of two closing clips (9), which are set at the same time at spaced apart locations, whereafter the sausage is severed between the two closing clips that have been set at the same time, characterized in that a string-feeding gripper (17) is provided, which after each clipping operation and immediately before or approximately at the beginning of the filling operation performs a structurally defined stroke to release a string portion in a predetermined adjustable length for being withdrawn by the sausage.

2. Apparatus for feeding a string portion in a predetermined adjustable length for use in the process according to claim 1, characterized by a string-feeding gripper (17), drive means (20) for driving the string-feeding gripper so that it performs a return stroke and a subsequent stroke in the length of the string portion, and a string backcheck (14) for locking the string during the return stroke of the string-feeding gripper (17).

3. Apparatus according to claim 2, characterized in that stops (16) are provided by adjusting the stroke of the string-feeding gripper (17) to the desired string length portion (10).

4. Apparatus according to claims 2 and 3, characterized in that the stops (16) are mounted on an adjustable connecting web (19) and are wedge-shaped and arranged to force the gripping jaws (26) of the string-feeding gripper (17) against each other in the final position.

5. Apparatus according to claim 4, characterized in that the pressure force applied by the gripping jaws (26) is adjustable by resilient elements (27).

6. Apparatus according to claims 2, 4 and 5, characterized in that the string-feeding gripper (17) comprises a connecting plate (28), which for the stroke is connected to a rod (29), which is movable by drive means (20).

7. Apparatus according to claim 2, characterized in that the string backcheck (14) comprises adjustable clamping elements (22), which release the string (12) only in the feeding direction.

8. Apparatus according to claim 7, characterized in that the pressure force exerted by the clamping elements (22) is adjustable by compression springs (23).

0 048 507

# Fig.1

# Fig. 2

7

Fig. 3

Fig. 4

Fig. 5

0 048 507